# FASCICULE DE BREVET EUROPEEN

(11) **EP 0 387 169 B1**
(45) Date de publication et mention de la délivrance du brevet: **02.03.1994**
(21) Numéro de dépôt: 90420126.6
(22) Date de dépôt: 09.03.1990
(51) Int. Cl.: H01Q 3/08, F16H 31/00

(54) **Dispositif d'entraînement en rotation d'une structure de grand diamètre, notamment d'une antenne**
Antriebsvorrichtung zum Drehen eines Aufbaus grossen Durchmessers, insbesondere einer Antenne
Driving device for the rotation of a structure with a large diameter, in particular an antenna

(30) Priorité: 10.03.1989 FR 8903431
(43) Date de publication de la demande: 12.09.1990
(73) Titulaire: NEYRPIC FRAMATOME MECANIQUE, 92084 Paris La Défense (FR)
(72) Inventeur: Ringot, Patrice, F-38000 Grenoble (FR); Parendel, Marc, F-38430 Moirans (FR)
(74) Mandataire: Karmin, Roger

(56) Documents cités:
- US-A- 3 059 889
- US-A- 3 515 009
- POST OFFICE ELECTRICAL ENGINEERS JOURNAL, vol. 65, no. 1, avril 1972, pages 2-11; V.C. MELLER et al.: "The large steerable aerials at Goonhilly earth station"
- PATENT ABSTRACTS OF JAPAN, vol. 7, no. 132 (E-180)[1277], 9 juin 1983;& JP-A-58 48 503 (MITSUBISHI DENKI K.K.) 22-03-1983
- TECHNISCHE MITTEILUNGEN KRUPP, no. 2, septembre 1987, pages 79-88, Essen, DE; L. VAN DER HORST et al.: "Step track unit for antenna control"

## Description

On sait que les antennes de communication avec les satellites doivent pouvoir balayer une demi-sphère centrée sur l'axe vertical du piédestal fixe. Pour ce faire, elle est soumise à un mouvement conjugué suivant deux plans, le premier en azimut, soit dans un plan horizontal, le second en élévation, c'est-à-dire dans un plan vertical.

Pour les structures moyennes, à savoir celles d'un diamètre inférieur ou égal à 13 mètres, le mouvement en élévation est obtenu par un vérin permettant un basculement de l'antenne d'environ 90°, tandis que le mouvement en azimut est obtenu au moyen de deux motoréducteurs sur les arbres desquels sont calés les pignons engrenant avec une couronne dentée fixe dont le diamètre est d'environ 1,5 mètre. Les motoréducteurs, prévus à rattrapage de jeu, sont disposés symétriquement et sont solidaires de l'ensemble mobile tournant avec l'antenne. Les motoréducteurs permettent les mouvements rapides (mode ralliement pour changer de pointage) et les mouvements lents (mode poursuite).

Lorsqu'on a affaire à des antennes dont le diamètre est supérieur ou égal à 16 mètres, le mouvement en élévation se fait toujours par un vérin comme pour les structures moyennes, mais le mouvement en azimut, réalisé par deux motoréducteurs, conduit à une couronne de grand diamètre (environ 4 mètres) pour des raisons de rigidité compte tenu de l'augmentation de la masse. Ceci est à la fois coûteux et encombrant, de telle sorte que la solution adoptée consiste en une configuration à moyen débattement permettant des déplacements par bonds de 60° avec un recouvrement de 30°.

Cette configuration à moyen débattement n'est guère plus satisfaisante que celle utilisant une couronne dentée de grand diamètre.

Les perfectionnements qui font l'objet de la présente invention visent à remédier à ces inconvénients et à permettre la réalisation d'un dispositif assurant un déplacement en azimut à grand débattement en continu, c'est-à-dire de l'ordre de 340°, avec une couronne dentée de diamètre réduit.

Conformément à l'invention, pour effectuer les mouvements rapides de la structure, on utilise un motoréducteur dont le pignon engrène avec la couronne, tandis que pour les mouvements lents, le motoréducteur est mis au repos, tandis que le dépacement de la structure suivant un angle relativement faible (plus ou moins 18°) est réalisé au moyen d'un vérin agissant sur la couronne au moyen d'un chariot pourvu d'un système de crabotage débrayable.

Le dessin annexé, donné à titre d'exemple, permettra de mieux comprendre l'invention, les caractéristiques qu'elle présente et les avantages qu'elle est susceptible de procurer :
Fig. 1 est une vue en élévation d'une structure comportant application des perfectionnements suivant l'invention.
Fig. 2 en est une coupe suivant II-II (fig. 1).
Fig. 3 est une vue suivant F (fig. 2) du chariot portant le système de crabotage.
Fig. 4 est une coupe suivant IV-IV (fig. 3) illustrant le système de crabotage en position engagée avec la couronne dentée.
Fig. 5 est une vue semblable à celle de fig. 4, mais illustrant le système de crabotage à sa position dégagée.
Fig. 6 est une coupe suivant VI-VI (fig. 3) à la position crabotée.
Fig. 7 est une vue semblable à celle de fig. 6, mais montrant le système de crabotage en position dégagée.

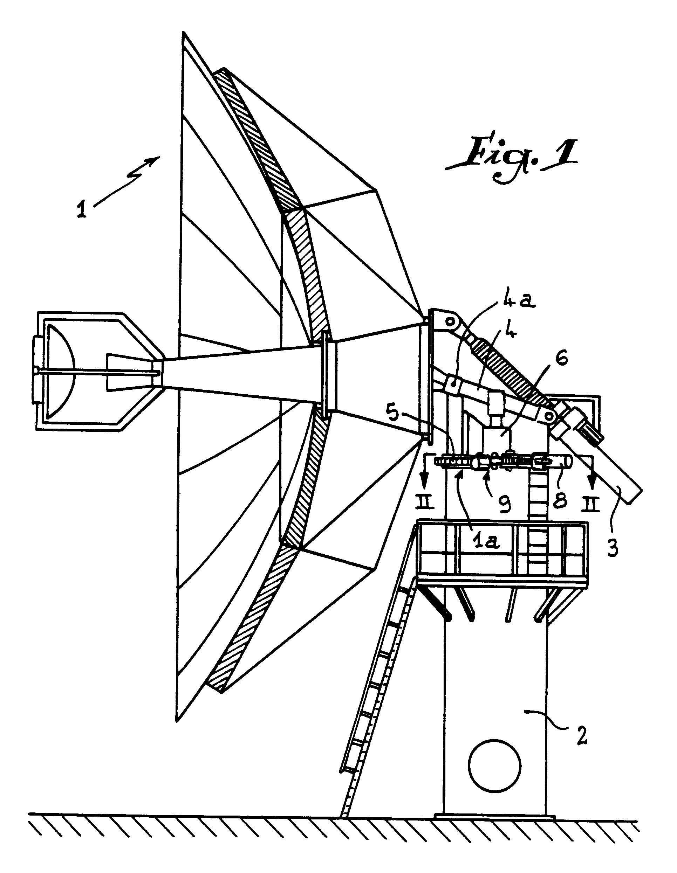

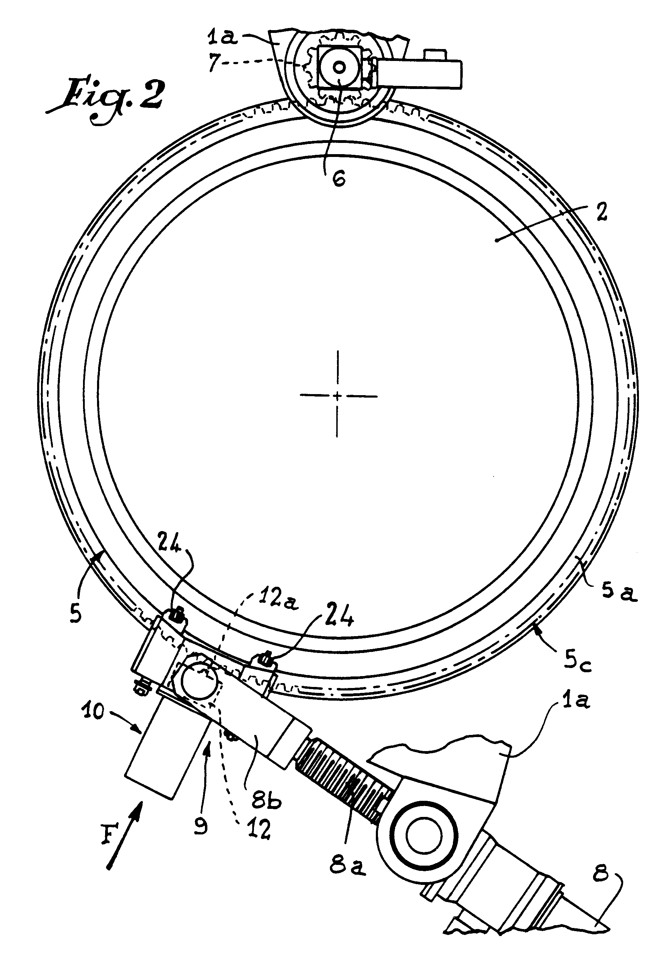

On a réprésenté en fig. 1 une antenne parabolique 1 de diamètre supérieur à 16 mètres et qui est montée à rotation par rapport à un piédestal fixe 2. L'antenne 1 est montée sur une embase 1a. Elle est basculante par rapport à son embase 1a au moyen d'un vérin à vis 3 et d'un ensemble 4 simulant un axe d'articulation 4a. Le piédestal comporte une couronne dentée fixe 5 tandis que l'embase 1a de l'antenne est pourvue d'une part d'un motoréducteur réversible 6 sur l'arbre de sortie duquel est calé un pignon 7 (fig. 2) engrenant avec la couronne dentée 5 et d'autre part d'un vérin à vis 8 dont l'extrémité du piston 8a réalisé sous la forme d'une vis est associée à un chariot 9 portant un système de crabotage 10. Comme illustré en fig. 2, le cylindre du vérin 8 est articulé autour d'un axe vertical porté par l'oreille 4a solidaire de l'embase 1a de l'antenne 1.

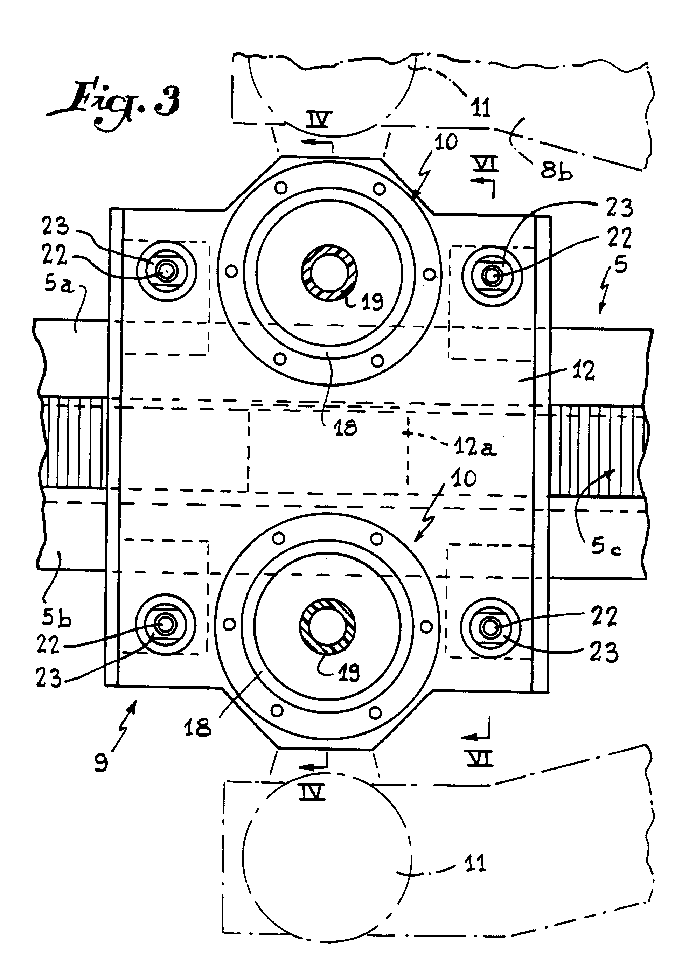

On a illustré en fig. 3 le chariot 9 qui comporte sur ses faces supérieure et inférieure une rotule 11 associée à la branche correspondante d'une fourche 8b solidaire de l'extrémité libre du piston 8a.

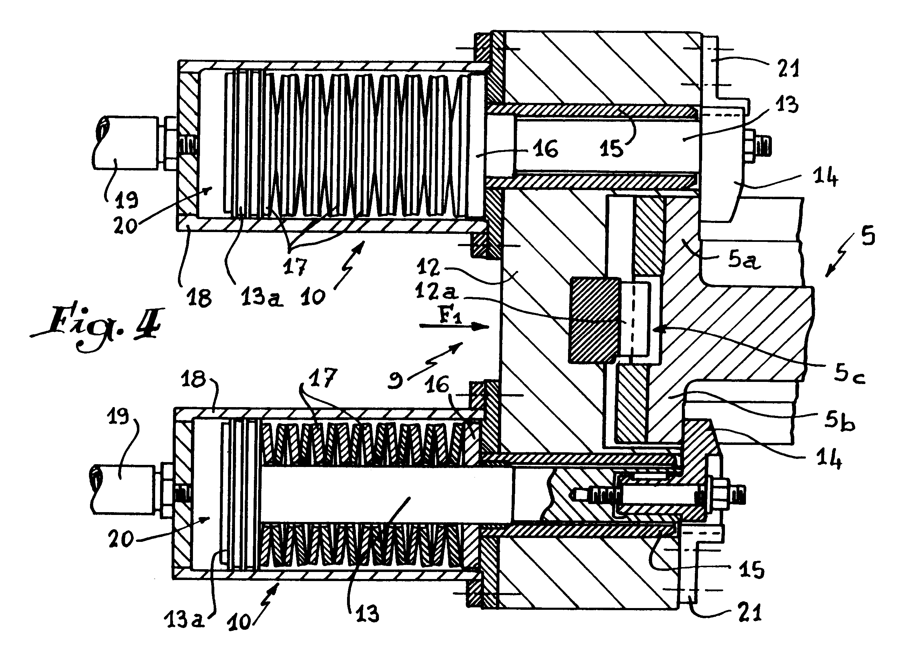

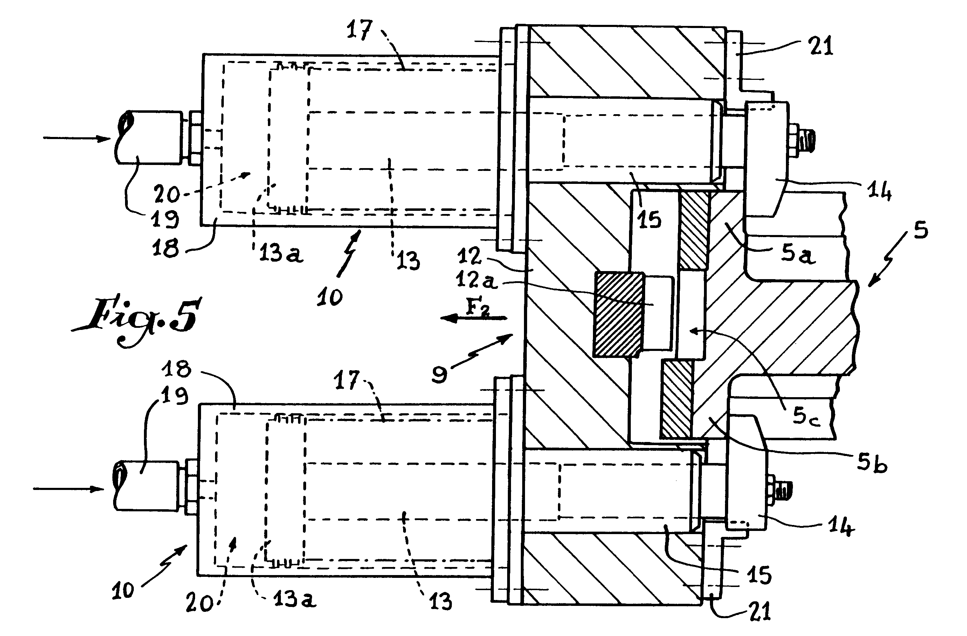

Le chariot 9 comporte un corps 12 réalisé sous la forme d'une plaque épaisse qui est montée à coulissement par rapport à deux tirants 13 illustrés en fig. 4 et 5. L'une des extrémités de chaque tirant 13 est pourvue d'un sabot 14 appuyant contre la face interne de deux viroles 5a, 5b qui se dressent au-dessus et au-dessous de la périphérie de la couronne 5, de part et d'autre de sa denture 5c.

Chaque tirant 13 traverse une fourrure 15 solidaire du corps 12, son extrémité opposée à celle qui porte le sabot 14 comprenant une tête 13a. Entre le dessous de la tête 13a et une rondelle 16 en appui sur le corps 12 sont placées des rondelles élastiques 17, de telle sorte que le corps 12 est chargé dans le sens de la flèche F1, si bien qu'une dent 12a ménagée dans le centre du corps 12 est crabotée dans la denture 5c de la couronne 5.

Chaque tête 13a est disposée dans un cylindre 18 fixé à la fourrure 15 et qui est alimenté en fluide sous pression par une canalisation 19, de sorte que lorsqu'on envoie du fluide dans cette canalisation, la chambre 20, constituée entre le fond du cylindre 18 et la tête 13a qui porte des joints d'étanchéité périphériques, est placée sous pression dans un but qu'on expliquera mieux plus loin.

On observe la présence d'un système de guidage 21 fixé sur le corps 12 et pénétrant dans une fente de chaque sabot 14 pour guider celui-ci et le bloquer en rotation.

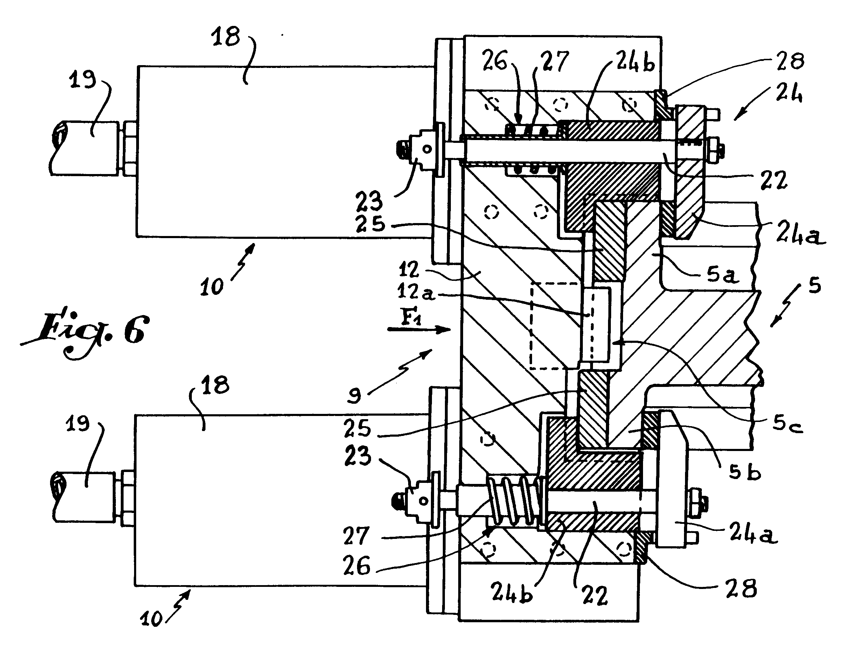

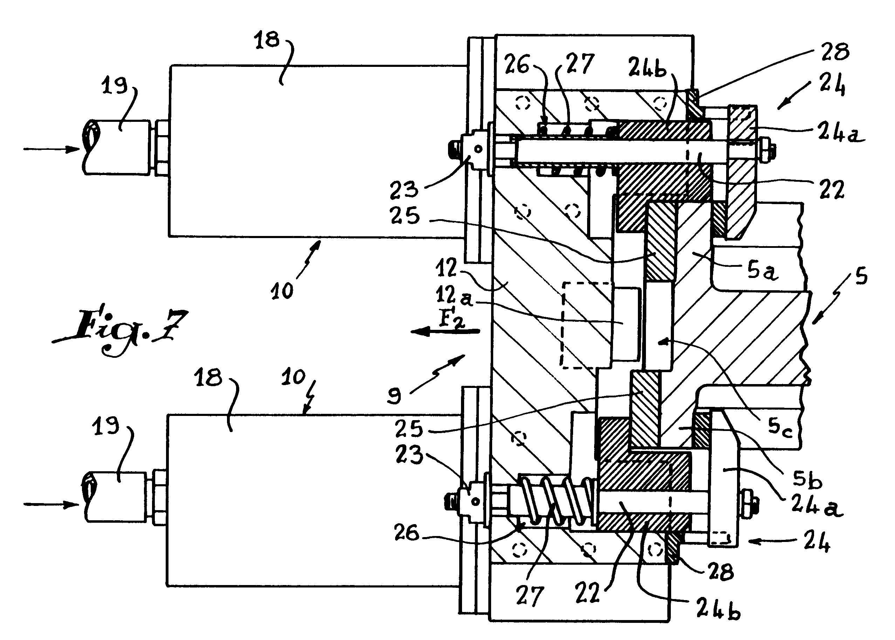

Le corps 12 est pourvu en outre de quatre tiges 22 qui le traversent de part en part (fig. 6 et 7). L'une des extrémités de chaque tige 22 est munie d'une butée fixe 23, tandis que son extrémité opposée porte un patin 24 en deux pièces chevauchant chaque virole 5a, 5b de la couronne 5. Chacun des patins est composé de deux éléments indépendants dont l'un 24a qui est fixé à l'extrémité considérée de la tige 22 est en appui contre la face interne de la virole correspondante 5a, 5b tandis que l'autre élément 24b du patin est monté à coulissement libre sur la tige 22. Ce second élément 24b est en contact d'une part avec la face horizontale de la virole correspondante et d'autre part avec sa face externe par l'intermédiaire d'une frette 25. Le contact entre l'élément 24b et la virole 5b est obtenu à l'aide d'un appui élastique. Le corps 12 comporte autour de chaque tige 22 un chambrage 26 dans lequel est placé un ressort de compression 27 prenant appui contre le fond de ce chambrage et contre l'élément 24b.

Le fonctionnement découle des explications qui précèdent.

Lorsqu'on envoie du fluide sous pression dans la canalisation 19 (fig. 5) sous une pression suffisante pour vaincre la réaction développée par les rondelles élastiques 17, celle-ci est annulée, de telle sorte que la réaction des ressorts 27 fait déplacer le corps 12 dans le sens de la flèche F2 (fig. 5 et 7) jusqu'à ce qu'il vienne reposer contre les quatre butées 23. Ce déplacement du corps 12 dégage la dent 12a de la denture 5c dans laquelle elle était précédemment verrouillée.

On adopte cette position lorsque le motoréducteur 6 doit faire changer l'orientation angulaire de l'antenne 1.

Au contraire, pour un déplacement lent, dit de poursuite, la pression est coupée dans les canalisations 19, de telle sorte que le verrouillage de la dent et de la couronne s'effectue par action des rondelles élastiques 17. Ainsi, la mise en marche du vérin 8 provoque une rotation lente de l'antenne dans un sens ou dans l'autre suivant que la vis 8a tourne dans un sens ou dans celui opposé.

On observe que les éléments 24a des patins 24 sont, comme les sabots 14, guidés par des équerres 28.

## Revendications

1. Dispositif d'entraînement en rotation d'une structure de grand diamètre notamment une antenne (1), du genre comprenant une couronne dentée fixe (5) avec laquelle engrène un pignon calé sur l'arbre de sortie d'un motoréducteur réversible en soi connu (6) en vue de faire varier l'orientation angulaire de la structure, caractérisé en ce qu'il comprend en combinaison :
- le motoréducteur réversible en soi connu (6) assurant un déplacement angulaire rapide de l'antenne (1) suivant un angle de l'ordre de 340° en continu ;
- et un mécanisme de rotation lente (9-10) suivant un angle réduit à ± 18° constitué par un vérin à vis (8) dont l'extrémité est articulée à un chariot (9) portant un système de crabotage (10) avec la denture (5a) de la couronne (5).

2. Dispositif suivant la revendication 1, caractérisé en ce que le chariot du mécanisme de rotation lente comprend un corps (12) monté à articulation par rapport aux deux branches d'une fourche (8b) assujettie à l'extrémité de la vis (8a) du vérin (8) et qui est monté coulissant élastiquement par rapport à des patins (24) chevauchant deux viroles verticales opposées (5a, 5b) solidaires de la couronne dentée (5), ledit corps (12) portant au moins une dent (12a) propre à engrener avec la denture (5c) de la couronne (5) en coulissant par rapport à deux tirants (13) dont l'une des extrémités est pourvue d'un sabot (14) appuyant contre la face interne de chaque virole, tandis que leur extrémité opposée comporte une tête (13a) sous laquelle prend appui un organe élastique (17), chaque tête étant placée dans un cylindre (18) alimenté en fluide sous pression pour annuler la force développée par l'organe élastique (17) lorsqu'on désire dégager la dent (12a) de la couronne dentée (5).

3. Dispositif suivant la revendication 2, caractérisé en ce que le corps (12) du chariot est monté coulissant par rapport à quatre tiges (22) dont l'une des extrémités est assujettie à un patin (24) chevauchant chaque virole (5a, 5b) tandis que son extrémité opposée comporte une butée (23).

4. Dispositif suivant la revendication 3, caractérisé en ce que chaque patin (24) est composé de deux éléments indépendants (24a, 24b) dont l'un (24a) est en appui contre la face interne de chaque virole (5a, 5b) tandis que l'autre (24b) est en contact avec la face externe et avec la face horizontale de chaque virole, le second élément (24b) constituant face d'appui pour l'extrémité d'un ressort de compression (27) dont l'autre extrémité est supportée par le corps (12) du chariot en vue d'appliquer celui-ci contre les butées (23) des tiges (22).

5. Dispositif suivant la revendication 4, caractérisé en ce que les éléments (24a, 24b) des patins (24) qui portent contre la face interne de chaque virole (5a, 5b) et les sabots (14) sont associés à des pièces (21, 18) propres à maintenir leur orientation.

## Patentansprüche

1. Vorrichtung zum Versetzen einer Struktur großen Durchmessers, insbesondere einer Antenne (1), in Rotation, wobei die Vorrichtung von der Art ist, daß sie einen feststehenden Zahnkranz (5) aufweist, in den ein auf der Abtriebswelle eines an sich bekannten umschaltbaren Getriebemotors (6) sitzendes Ritzel eingreift, um dadurch die Winkelstellung der Struktur zu verändern,
dadurch **gekennzeichnet**,
daß diese Vorrichtung eine Kombination folgender Elemente aufweist:
- den an sich bekannten umschaltbaren Getriebemotor (6), der eine rasche Winkelversetzung der Antenne (1) sicherstellt, die einen Winkel in der Größenordnung von 340° ohne Unterbrechung durchlaufen kann;
- und einen Mechanismus für langsame Rotation (9-10) innerhalb eines auf ± 18° beschränkten Winkelbereichs, der eine Gewindespindel (8) aufweist, deren Ende mit einem Schlitten (9) gelenkig verbunden ist, der ein mit der Verzahnung (5a) des Kranzes (5) verbindbares Klauenkupplungsystem (10) trägt.

2. Vorrichtung gemäß Anspruch 1,
dadurch **gekennzeichnet**,
daß der Schlitten des Mechanismus für langsame Rotation einen Hauptkörper (12) aufweist, der bezüglich der beiden Arme einer am Ende der Schraube (8a) der Spindel (8) befestigten Gabel (8b) gelenkig montiert ist und der bezüglich von Gleitkufen (24), die zwei senkrechte, gegenüberliegende, fest mit dem Kranz (5) verbundene Ringe (5a, 5b) hintergreifen, elastisch gleitend montiert ist, wobei dieser Hauptkörper (12) zumindest einen zum Eingriff in die Verzahnung (5c) des Kranzes (5) geeigneten Zahn (12a) trägt und verschiebbar bezüglich zweier Spannstangen (13) ist, deren eines Ende mit einem sich gegen die Innenseite jedes Ringes abstützenden Schuh (14) versehen ist, während deren entgegengesetztes Ende einen Kopf (13a) aufweist, unter dem ein elastisches Mittel (17) zur Anlage kommt, wobei jeder Kopf in einem Zylinder (18) liegt, der mit einem druckbeaufschlagten Fluid versorgt wird, um die durch das elastische Mittel (17) aufgebrachte Kraft aufzuheben, wenn der Zahn (12a) aus dem Zahnkreis entkuppelt werden soll.

3. Vorrichtung gemäß Anspruch 2,
dadurch **gekennzeichnet**,
daß der Hauptkörper (12) des Schlittens bezüglich vierer Stifte (22), deren eines Ende an einer jeden Ring (5a, 5b) hintergreifenden Gleitkufe (24) befestigt ist, während deren entgegengesetztes Ende einen Anschlag (23) aufweist, gleitend montiert ist.

4. Vorrichtung gemäß Anspruch 3,
dadurch **gekennzeichnet**,
daß sich jede Gleitkufe (24) aus zwei unabhängigen Elementen (24a, 24b) zusammensetzt, von denen das eine (24a) auf der Innenseite Jedes Ringes (5a, 5b) zur Anlage kommt, während das andere (24b) an der Außenseite und an der horizontalen Seite jedes Ringes anliegt, wobei das zweite Element (24b) die Anlagefläche für das Ende einer Schraubendruckfeder (27) bildet, deren anderes Ende vom Hauptkörper (12) des Schlittens getragen wird, um diesen gegen die Anschläge (23) der Stifte (22) zu drücken.

5. Vorrichtung gemäß Anspruch 4,
dadurch **gekennzeichnet**,
daß die Elemente (24a, 24b) der Gleitkufen (24), die auf der Innenseite jedes Ringes (5a, 5b) ruhen, und die Schuhe (14) mit zu ihrer Lagefixierung geeigneten Teilen verbunden sind.

## Claims

1. A driving device for the rotation of a structure of large diameter such as an antenna (1) of the type comprising a fixed crown wheel (5) which is engaged by a pinion keyed onto the output shaft of a reversible geared motor (6), which is in itself known, with a view to altering the angular orientation of the structure, characterised in that it comprises in combination:
- the reversible geared motor (6), which is in itself known, which ensures rapid angular movement of the antenna (1) through a continuous angle of the order of 340°,
- and a slow rotation mechanism (9-10), through a reduced angle of ± 18°, comprising a screw jack (8), the end of which is hinged to a carriage (9) incorporating a claw clutch system (10) engaging the teeth (5a) of crown wheel (5).

2. A device according to claim 1, characterised in that the carriage of the slow rotation mechanism comprises a body (12) which is mounted in a hinged fashion with respect to the two arms of a fork (8b) attached to the end of the screw (8a) of the jack (8) and which is slidably and elastically mounted with respect to slide shoes (24) which span two opposing vertical rims (5a, 5b) integral with the crown wheel (5), the said body (12) comprising at least one tooth (12a) which engages with the teeth (5c) of the crown wheel (5) sliding with respect to two tie bars (13) which bear a shoe (14) at one end bearing against the inside of each rim, while the opposite end incorporates a head (13a) beneath which bears an elastic member (17), each head being placed in a cylinder (18) provided with pressurised fluid to cancel out the force produced by the elastic member (17) when it is desired to disengage the tooth (12a) from the crown wheel (5).

3. A device according to claim 2, characterised in that the body (12) of the carriage is slidably mounted with respect to four tie rods (22) one of the ends of which is attached to a slide shoe (24) spanning each rim (5a,5b) while its opposite end incorporates a stop (23).

4. A device according to claim 3, characterised in that each slide shoe (24) comprises two independent members (24a, 24b) of which one (24a) bears against the inside of each rim (5a,5b) while the other (24b) is in contact with the outer face and the horizontal face of each rim, the second member (24b) constituting a bearing surface for the end of a compression spring (27) the other end of which is supported by the body (12) of the carriage in order to press the latter against the stops (23) of the tie rods (22).

5. A device according to claim 4, characterised in that the members (24a, 24b) of the slide shoes (24) which bear against the inside face of each rim (5a,5b) and the shoes (14) are associated with members (21, 18) which maintain their orientations.
